# EUROPÄISCHE PATENTSCHRIFT

(11) **EP 2 088 350 B1**
(45) Veröffentlichungstag und Bekanntmachung des Hinweises auf die Patenterteilung: **20.06.2012**
(21) Anmeldenummer: 08101466.4
(22) Anmeldetag: 11.02.2008
(51) Int. Cl.: F16F 15/32

(54) **Verfahren zur im Rahmen der Herstellung eines Auswuchtgewichts vorgesehenden Verbindung eines Gewichtskörpers und eines Befestigungselements sowie entsprechendes Auswuchtgewicht**
Method for connecting a weight during the production of a balancing weight and a fastening element and corresponding balancing weight
Procédé de liaison prévue dans le cadre de la fabrication d'une masselotte d'équilibrage d'un corps d'équilibrage et d'un élément de fixation, ainsi que masselotte d'équilibrage correspondante

(43) Veröffentlichungstag der Anmeldung: 12.08.2009
(73) Patentinhaber: WEGMANN automotive GmbH & Co. KG, 97209 Veitshöchheim (DE)
(72) Erfinder: Kunz, Herwig, 97209 Veitshöchheim (DE); Wagenschein, Dietmar, 97209 Veitshöchheim (DE)
(74) Vertreter: Götz, Georg Alois

(56) Entgegenhaltungen:
- EP-A- 0 994 274
- EP-A- 1 398 522
- DE-U1-202005 012 451
- US-A1- 2005 062 331
- US-A1- 2007 251 078

## Beschreibung

Die Erfindung betrifft ein Verfahren zur im Rahmen der Herstellung eines Auswuchtgewichts vorgesehenen Verbindung eines Gewichtskörpers und eines Befestigungselements zum Befestigen des Gewichtskörpers an einem auszuwuchtenden Gegenstand sowie ein entsprechendes Auswuchtgewicht.

Auswuchtgewichte, die dazu verwendet werden, um Fahrzeugräder bzw. Felgen auszuwuchten, bestehen in aller Regel aus einem Gewichtskörper sowie einem Befestigungs- bzw. Halteelement, mit dessen Hilfe der Gewichtskörper am Rad bzw. der Felge gehaltert wird. Im Rahmen der Herstellung dieser Auswuchtgewichte wird oft der Gewichtskörper mehr oder weniger fest mit dem Befestigungselement verbunden, um als Auswuchtgewicht ein einziges zusammenhängendes Element zu erhalten

Auswuchtgewichte bzw. Ausgleichsgewichte sind seit langem bekannt. Beispielsweise ist in der US 2,122,065 ein Auswuchtgewicht beschrieben, bei dem der Gewichtskörper mittels eines Federclips an einer äußeren Kante des auszuwuchtenden Rades gehaltert werden kann.

Zur Herstellung der Verbindung zwischen dem Gewichtskörper und dem Befestigungselement werden unterschiedliche Verfahren verwendet. Beispielsweise wird in der EP 1 752 684 A2 beschrieben, dass es möglich ist, eine Feder mittels Nieten, Schrauben, Kleben bzw. Schweißen an der Oberfläche eines Gewichtskörpers zu befestigen.

Die bisher bekannten Verbindungsverfahren bzw. Verfahren zur Halterung des Gewichtskörpers am Befestigungselement sind jedoch entweder schwierig durchzuführen, beispielsweise dadurch, dass eine Vielzahl von Arbeitsschritten erforderlich ist, und/oder beeinflussen die zu verbindenden Materialien nachteilig. Beispielsweise ist eine Erstellung einer Verbindung mittels Vernieten relativ aufwendig, da hierzu zahlreiche Arbeitsschritte erforderlich sind. Zunächst muss ein separat vorzusehendes Nietelement verwendet werden, dass in einem ersten Arbeitsschritt in entsprechende Öffnungen oder dergleichen des Gewichtskörpers bzw. des Befestigungselements eingeführt werden muss, um diese zunächst lose miteinander zu verbinden. Ist diese lose Verbindung dann hergestellt, ist ein weiterer Arbeitsschritt erforderlich, um die Verbindung zu sichern, wozu beispielsweise das Nietelement flachgedrückt wird, um so Überstände über die jeweiligen Öffnungen des Gewichtskörpers bzw. des Befestigungselements auszubilden, durch die das Nietelement geführt ist, so dass das Gewicht und das Befestigungselement nicht mehr voneinander getrennt werden können.

Sollen der Gewichtskörper und das Befestigungselement miteinander vernietet werden, so ist beispielsweise bei zum Korrosionsschutz verzinkten Elementen ein weiteres Problem darin zu sehen, dass die Zinkschicht in aller Regel beschädigt wird, wenn zunächst die Bohrungen zum Durchführen des Nietelements gesetzt werden und dann das Nietelement selbst eingesetzt wird. Auch bei einem Verschweißen des Gewichtskörpers mit dem Halteelement müssen Beschädigungen einer die Elemente umgebenden Zinkschicht in Kauf genommen werden, so dass der Schutz gegen Korrosion nicht mehr gegeben ist. Andererseits sind Vollzinkelemente sehr kostenaufwendig, da die Rohstoffpreise für Zink wesentlich höher liegen als die Preise für Stahl.

Der Erfindung liegt damit die Aufgabe zugrunde, ein diesbezüglich verbessertes Verfahren zur im Rahmen der Herstellung eines Auswuchtgewichts vorgesehenen Verbindung eines Gewichtskörpers und eines Befestigungselements zum Befestigen des Gewichtskörpers an einem auszuwuchtenden Gegenstand sowie ein entsprechend verbessertes Auswuchtgewicht anzugeben.

Zur Lösung dieser Aufgabe ist erfindungsgemäß ein Verfahren zur im Rahmen der Herstellung eines Auswuchtgewichts vorgesehenen Verbindung eines Gewichtskörpers und eines Befestigungselements zum Befestigen des Gewichtskörpers an einem auszuwuchtenden Gegenstand vorgesehen, das sich dadurch auszeichnet, dass der Gewichtskörper und das Befestigungselement durch Clinchen miteinander verbunden werden.

Der Gewichtskörper sowie das Befestigungselement, das dazu dient, diesen beispielsweise an einem Rad zu befestigen, werden also nicht wie üblich miteinander vernietet, verschraubt oder verschweißt, sondern im Rahmen eines Clinchverfahrens miteinander verbunden. Das Clinchen ist ein Verfahren, bei dem es zu einem Fügen durch Umformen kommt. Die zu verbindenden bzw. aneinander zu befestigenden Teile, hier also der Gewichtskörper und das Halte- bzw. Befestigungselement, werden dazu meist zunächst überlappt angeordnet, um anschließend mit Hilfe geeigneter Umformwerkzeuge, in der Regel mittels eines Stempels und einer Matrize durch Eindrücken des Stempels in Richtung der Matrize, die hierzu vorteilhafterweise einen geeigneten Bereich wie eine Ausnehmung aufweist, eine Clinchverbindung zwischen den Elementen herzustellen. Charakteristisch für das Clinchen ist, dass keine Zusatzwerkstoffe zur Verbindungserstellung benötigt werden.

Es handelt sich somit um ein Verfahren zum Zusammenfügen verschiedener Elemente derart, dass eine haltbare, gegebenenfalls unlösbare, Verbindung hergestellt wird, wobei das Verfahren unter anderem den Vorteil hat, dass mit dem Stempel und der Matrize vergleichsweise einfache bzw. nicht zwangsläufig eine komplexe Ausbildung zu ihrer Bedienung erfordernde Werkzeuge verwendet werden können. Das Verfahren an sich ist sehr kompakt, ohne zusätzliche komplizierte Arbeitsgänge, durchzuführen. Insbesondere ist es nicht erforderlich, ein weiteres separates Element wie ein Nietelement herzustellen, dieses einzulegen und nach dem Einlegen nachzubearbeiten bzw. einen komplexen Schweißvorgang oder ähnliches durchzuführen. Die Verwendung des Clinchens als Fügeverfahren durch Umformung ermöglicht es, auf zusätzliche Teile, die gegebenenfalls aufwendig hergestellt werden müssen oder zusätzlich in weiteren Arbeitsschritten in den Aufbau eingefügt werden müssen, beispielsweise Schrauben oder dergleichen, zu verzichten. Zudem werden die zu verbindenden Materialien vergleichsweise schonend behandelt, so dass insbesondere ein gegebenenfalls vorgesehener Korrosionsschutz erhalten bleibt und somit eine zum Beispiel beim Schweißen erforderliche Nachbehandlung entfällt.

Das Clinchen kann, wie bereits erwähnt wurde, unter Verwendung eines Stempelwerkzeugs und einer Matrize durchgeführt werden. Dabei ist das Stempelelement des Stempelwerkzeugs so ausgebildet, dass es zum Zusammenfügen der zu verbindenden Bauteile in einen entsprechenden (Aufnahme-) Bereich der, in der Regel starr ausgebildeten, Matrize eingreifen kann bzw. in Richtung dieses Bereichs bewegt wird, so dass Material der zu verbindenden Teile in den Aufnahmebereich hinein verschoben wird. Zwischen dem Stempel und der Matrize werden die zu verbindenden Teile, also der Gewichtskörper und das Befestigungselement, bei dem es sich in der Regel um eine Feder oder Klammer handelt, angeordnet, wobei die Anordnung so erfolgt, dass die Stellen, an denen die Verbindung hergestellt werden soll, übereinander zu liegen kommen. Anschließend wird der Stempel in Richtung der Matrize bzw. der Ausnehmung der Matrize hinuntergedrückt, so dass die Fügepartner gemeinsam durchsetzt werden und dann, wenn der Werkstoff des Gewichtskörpers, zum Beispiel Stahl, den Boden der Matrize erreicht, dieser so gestaucht wird, dass durch Breiten oder Fließpressen eine unlösbare Verbindung entsteht. Der Vorgang des Clinchens an sich ist beispielsweise im "Handbuch Umformtechnik - Grundlagen, Technologien, Maschinen" von Eckart Doege und Bernd-Arno Behrens, das im Springer-Verlag erschienen ist, geschildert.

Das Verfahren zur Verbindung eines Gewichtskörpers mit einem Befestigungselement, um so gemäß der Erfindung ein Auswuchtgewicht zu erhalten, kann, insbesondere zumindest, die folgenden Schritte umfassen:
- Ansetzen und/oder Positionieren eines Stempelwerkzeugs, einer Matrize, des Gewichtskörpers und/oder des Befestigungselements,
- Andrücken des Stempelwerkzeugs an den Gewichtskörper derart, dass Material des Gewichtskörpers in Richtung und/oder in eine Ausnehmung der Matrize verschoben wird,
- Durchdrücken des Stempelwerkzeugs derart, dass Material des Gewichtskörpers einen Bodenbereich der Matrize und/oder der Ausnehmung der Matrize erreicht und
- Rückstellung des Stempelwerkzeugs und der Matrize vom fertigen Auswuchtgewicht.

Das Verfahren wird also so durchgeführt, dass zunächst die zu verbindenden Teile, also der Gewichtskörper und das Befestigungselement, geeignet übereinander bzw. aneinander gelegt werden, woraufhin die Umformwerkzeuge, die zur Bearbeitung vorgesehen sind, in Bezug auf die zu verbindenden Element geeignet angesetzt bzw. positioniert werden. Zweckmäßigerweise erfolgt dies so, dass der Gewichtskörper und das Befestigungselement, gegebenenfalls übereinander liegend, auf einer Oberfläche der Matrize angeordnet werden, woraufhin der Stempel oberhalb der zu verbindenden Teile derart in eine geeignete Position gebracht wird, dass er, wenn er beispielsweise auf den oben liegenden Gewichtskörper eindrückt, zum Beispiel Material des Gewichtskörpers durch eine Öffnung oder Bohrung des darunter liegenden Befestigungselements hindurch in eine entsprechend vorgesehene Ausnehmung der Matrize durchdrücken kann.

Im nächsten Schritt erfolgt dann ein Andrücken des Stempels zum gemeinsamen Durchsetzen der Fügepartner an der Fügestelle. Dabei wird Material des Gewichtskörpers, der auf einer Oberseite von der Stempelfläche des Stempels eingedrückt wird, in Richtung auf das Befestigungselement und gegebenenfalls durch eine geeignete Öffnung des Befestigungselements hindurch in Richtung der Matrize verschoben.

Danach erfolgt ein Durchdrücken des Stempelwerkzeugs derart, dass Material des Gewichtskörpers, bei dem es sich vorzugsweise um einen Stahlkörper handelt, einen Bodenbereich, insbesondere den Boden einer Ausnehmung, der Matrize erreicht. Dies führt zu einem Stauchen des Materials, derart, dass durch Breiten oder Fließpressen eine unlösbare Verbindung zwischen dem Gewichtskörper und dem Befestigungselement hergestellt wird.

Dabei entsteht das letztlich zu fertigende Teil, also das Auswuchtgewicht, so dass lediglich im letzten Schritt das Stempelwerkzeug und die Matrize entfernt werden müssen, damit das Auswuchtgewicht in der fertigen Form aus dem Herstellungsbereich entnommen werden kann.

Vorteilhaft bei diesem Verfahren ist, dass die Zahl der erforderlichen Umformwerkzeuge mit dem Stempel und der zugehörigen Matrize vergleichsweise überschaubar ist und dass das Verfahren mit relativ wenigen Arbeitsschritten durchgeführt werden kann. Dadurch kann es in unterschiedlichen Bereichen und insbesondere auch bei einer Produktion im Ausland eingesetzt werden.

Zudem können vorteilhafterweise die Schritte des Andrückens und des Durchdrückens des Stempelwerkzeugs in einem einheitlichen Arbeitsschritt kombiniert werden. Es ist also letztlich ein einziger Hub bzw. ein einziger Arbeitsschritt zum Führen des Stempels erforderlich, ohne dass zwischen dem Andrücken bzw. dem Durchdrücken des Stempels eine weitere komplexe Umordnung der Teile bzw. ein Hinzuführen von weiteren Teilen erforderlich wäre. Insbesondere sind im Unterschied zu einem Nietverfahren kein separates Hinüberlegen eines Befestigungselements wie einer Klammer über einen Zapfen bzw. ein eigens eingeführtes Nietelement und dann ein erneutes Ansetzen eines Werkzeugs zum Schaffen einer Kante an dem Nietelement derart, dass die Befestigung unlösbar wird, erforderlich.

Im Rahmen des erfindungsgemäßen Verfahrens kann eine form- und/oder kraftschlüssige und/oder stoffschlüssige Verbindung zwischen dem Gewichtskörper und dem Befestigungselement hergestellt werden. Insbesondere kann durch das Vorsehen einer geeigneten, vorzugsweise kleinen, Öffnung im Befestigungselement, durch die dann das Material des Gewichtskörpers beim Stempeln hindurchfließt, im Zusammenhang mit einer geeignet geformten Matrize beim Clinchen unterseitig ein Überstand über der Öffnung ausgebildet werden, so dass die Verbindung formschlüssig ist. In der Regel wird beim Clinchen ebenso ein Kraftschluss erzeugt. Unter bestimmten Bedingungen kann auch eine stoffschlüssige Verbindung erzeugt werden.

Als Befestigungselement kann, zur Ermöglichung der Clinchverbindung, ein Befestigungselement mit einer Öffnung, insbesondere einer Bohrung, zum Durchtritt vom Material des Gewichtskörpers verwendet werden.

Es wird also beispielsweise ein Federelement herangezogen, das bereits an geeigneter Stelle ein Loch bzw. eine runde, gegebenenfalls auch eckige, Bohrung aufweist, durch die das Material des Gewichtskörpers, das vom Stempel verdrängt wird, beim Umformprozess hindurchtreten kann, um so den Verbund herzustellen. Die Öffnung erleichtert somit das Clinchen und verbessert gegebenenfalls das Ergebnis.

Darüber hinaus kann das Befestigungselement mittels eines beim Clinchen, insbesondere durch Durchtritt von Material des Gewichtskörpers durch eine Öffnung des Befestigungselements, entstehenden Hinterschnitts und/oder Vorsprungs, insbesondere in Hut-/oder Pilzform, am Gewichtskörper gehaltert werden.

Die Öffnung des Befestigungselements und die Matrize, die diesem beim Clinchvorgang untergelegt wird, sind also bezüglich ihrer Form derart aneinander angepasst, dass das beim Stempeln hindurchtretende Material, bei dem es sich um Material des Gewichtskörpers handelt, sich unterhalb des Befestigungselements, vorzugsweise in einer entsprechenden Ausnehmung der Matrize, etwas über die Ränder der Öffnung bzw. Bohrung hinaus ausbreiten kann, so dass ein geeigneter Hinterschnitt bzw. ein Vorsprung oder dergleichen entsteht, so dass die Verbindung zwischen dem Gewichtskörper und dem Befestigungs- bzw. Halteelement formschlüssig gesichert wird. Es entsteht also auf der Unterseite der Kombination des Gewichtskörpers und des Befestigungselements durch das Pressverfahren eine zum Beispiel hut- bzw. pilzartige Form, die ein Abrutschen bzw. ein Trennen des Befestigungselements vom Gewichtskörper verhindert.

Der Gewichtskörper wird also beispielsweise mit einem Zapfen bzw. einem anderen Stempelelement eingedrückt, so dass der Stahl auf der dem Stempel entgegengesetzten Seite um das Befestigungselement, also zum Beispiel eine Feder, herumfließen kann, so dass ein Formschluss zur sicheren Halterung entsteht.

Als Gewichtskörper kann ein Gewichtskörper aus Stahl, insbesondere aus ungehärtetem Stahl, und/oder als Befestigungselement ein Befestigungselement aus Stahl, insbesondere aus gehärtetem Stahl, verwendet werden.

Selbstverständlich können unter bestimmten Bedingungen auch Materialien anderer Art verwendet werden, beispielsweise Zinkmaterialien, Tempergussmaterialien oder dergleichen. Aus Kostengründen, sowie aus praktischen Gründen empfiehlt sich jedoch derzeit der Einsatz von Stahlmaterialien, insbesondere wegen der hohen Preise für Zink, wobei vorzugsweise, jedoch nicht zwingend, für die Feder gehärteter Stahl, für den Gewichtskörper hingegen ungehärteter Stahl verwendet werden kann.

Wie bereits dargelegt wurde, kann als Befestigungselement eine Feder und/oder Klammer verwendet werden. Allgemein empfiehlt sich der Einsatz elastischer Befestigungselemente, insbesondere zur Vermeidung von Nachteilen durch Krafteinwirkungen, beispielsweise beim Betrieb eines Kraftfahrzeugs, an dem ein Auswuchtgewicht der beschriebenen Art radseitig zu befestigen ist. Grundsätzlich ist jedoch auch der Einsatz anderer Befestigungselemente denkbar, wobei selbstverständlich darauf zu achten ist, dass diese für den vorgesehenen Einsatzbereich geeignet sind, also insbesondere nicht brechen oder Materialermüdungen bzw. andere negative Eigenschaften zeigen.

Beim erfindungsgemäßen Verfahren können ein verzinkter Gewichtskörper und/oder ein verzinktes Befestigungselement verwendet werden. Durch das Verzinken wird ohne den Einsatz von Vollzinkmaterial ein Korrosionsschutz hergestellt, wobei dieser Korrosionsschutz durch das Clinchen, durch das erfindungsgemäß die Verbindung zwischen dem Gewichtskörper und dem Halteelement hergestellt wird, nicht beeinträchtigt wird. Der Vorteil beim Clinchen ist, dass ein Zinküberzug, der gegebenenfalls auf den aus Stahl bestehenden zu verbindenden Körpern aufgebracht ist, nicht zerstört wird, sondern, beispielsweise beim Gewichtskörper, einfach mit dem Material des Gewichtskörpers durch eine entsprechende Öffnung der Feder hindurch gedrückt wird. Zwar wird eine Zinkschicht, die auf den zu verbindenden Elementen aufgebracht ist, im Rahmen des Umformprozesses gegebenenfalls dünner, beispielsweise derart, dass eine vorher 8 µm dicke Schicht hinterher an den entstehenden Kanten gegebenenfalls nur noch eine Dicke von 2 oder 3 µm hat, aber der Korrosionsschutz als solcher bleibt mit der Korrosionsschutzschicht erhalten. Dies bedeutet vorteilhafterweise, dass keine separate nachfolgende Korrosionsbehandlung erforderlich ist.

Dementsprechend kann das Clinchen unter Erhalt der Zinkschicht des Gewichtskörpers und/oder des Befestigungselements durchgeführt werden. Der durch die Verzinkung gegebene Korrosionsschutz bleibt also beim erfindungsgemäßen Verbindungsverfahren erhalten, beispielsweise im Unterschied zu Schweißverfahren, bei denen nachträglich eine separate Korrosionsbehandlung erforderlich wird, da die Schutzschichten durch das Schweißen beschädigt werden.

Das Befestigungselement und der Gewichtskörper können an der beim Einsatz des Auswuchtgewichts dem auszuwuchtenden Gegenstand zugewandten oder abgewandten Seite des Gewichtskörpers miteinander verbunden werden. Es ist also sowohl möglich, dass das Befestigungselement so am Gewichtskörper angebracht ist, dass nach der Befestigung des Auswuchtgewichts am auszuwuchtenden Rad oder dergleichen die Verbindung sichtbar ist, als auch, dass die Verbindung rückseitig gegeben ist, so dass der Verbindungspunkt nach dem Anbringen des Auswuchtgewichts, da dem Rad zugewandt, nicht mehr sichtbar ist.

Ein sichtbarer Verbindungspunkt hat den Vorteil, dass die Haltbarkeit der Verbindung zwischen dem Gewichtskörper und dem Befestigungselement gegebenenfalls nachträglich ohne größeren Aufwand überprüft werden kann, indem einfach der frei sichtbare Verbindungsbereich überprüft wird. Insbesondere eine Verbindung auf der Sichtseite kann zudem den Vorteil bieten, dass bei Verwendung einer geeigneten Klammer oder dergleichen die hier durch Clinchen hergestellte Verbindung zwischen dem Befestigungselement und dem Gewicht nicht mehr sicherheitsrelevant sein muss, wenn nämlich durch die Form des Befestigungselements bzw. eine Klammerung und dergleichen ohnehin nach Anbringung am auszuwuchtenden Gegenstand eine Halterung gegeben ist, so dass das Gewicht festgedrückt bzw. sicher befestigt ist, unabhängig davon, ob die Clinchverbindung noch besteht oder nicht. Es ist also möglich, dass durch das Befestigungselement der Gewichtskörper zum Beispiel so an die Felge angeklammert wird, dass die Fügeverbindung, also der Clinchpunkt, für die Halterung des Gewichts am auszuwuchtenden Gegenstand nicht mehr erforderlich ist, so dass gegebenenfalls in Kauf genommen werden könnte, dass die Clinchverbindung beim Aufschlagen zur Anbringung des Auswuchtgewichts am Rad aufbricht.

Grundsätzlich ist wie erwähnt ebenso eine Verbindung auf der Rückseite des Gewichtskörpers möglich, wobei allerdings der Nachteil besteht, dass bei Lösung einer solchen Verbindung bei einem Befestigungselement, das keine zusätzliche Halterung des Gewichtskörpers bietet, gegebenenfalls der Gewichtskörper einfach abfällt, da rückseitig am Gewicht anzubringende Befestigungselemente in der Regel das Gewicht nicht umklammern, so dass grundsätzlich, obwohl Clinchverbindungen meist sehr haltbar sind, eine Verbindung auf der nach der Montage sichtbaren Seite vorzuziehen ist.

Die Einheit, die der Gewichtskörper und das Befestigungselement des Auswuchtgewichts bieten, ist somit bei Verwendung eines geeigneten Befestigungselements vorrangig insofern von Bedeutung, als dass die beiden Teile vor der eigentlichen Montage eine Einheit bilden, so dass unter anderem kein umständliches Zusammensuchen der Teile erforderlich ist. Zudem ist bei einem einheitlichen Element die Montage einfacher durchzuführen.

Des Weiteren betrifft die Erfindung ein Auswuchtgewicht mit einem Gewichtskörper und einem Befestigungselement zum Befestigen des Gewichtskörpers an einem auszuwuchtenden Gegenstand, das sich dadurch auszeichnet, dass der Gewichtskörper und das Befestigungselement durch Clinchen bzw. wenigstens eine Clinchverbindung, gegebenenfalls mehrere Clinchverbindungen, miteinander verbunden sind. Dabei ist insbesondere ein Auswuchtgewicht gemeint, das nach einem im vorstehenden beschriebenen Verfahren hergestellt wurde, bzw. bei dem die Verbindung zwischen dem Gewichtskörper und dem Befestigungselement wie vorstehend beschrieben erzeugt wurde.

Das durch Clinchen hergestellte Auswuchtgewicht weist den Vorteil auf, dass durch das Clinchen nicht nur eine gegebenenfalls unlösbare und die Sicherheitsanforderungen erfüllende Verbindung zwischen dem Befestigungselement und dem Gewichtskörper gegeben ist, sondern dass außerdem die Herstellung dieser Verbindung ohne wesentliche Beeinträchtigung der Materialeigenschaften der zu verbindenden Elemente auf besonders einfache Weise erzeugt werden kann.

Insbesondere kann das Auswuchtgewicht mittels Clinchen unter Verwendung eines Stempelwerkzeugs und einer Matrize hergestellt sein, also mit lediglich zwei Umformwerkzeugen, die keinen komplexen Aufbau erfordern.

Das Auswuchtgewicht kann unter Durchführung der folgenden Schritte hergestellt sein:
- Ansetzen und/oder Positionieren eines Stempelwerkzeugs, einer Matrize, des Gewichtskörpers und/oder des Befestigungselements,
- Andrücken des Stempelwerkzeugs an den Gewichtskörper derart, dass Material des Gewichtskörpers in Richtung und/oder in einer Ausnehmung der Matrize verschoben wird,
- Durchdrücken des Stempelwerkzeugs derart, dass Material des Gewichtskörpers einen Bodenbereich der Matrize und/oder der Ausnehmung der Matrize erreicht und
- Rückstellung des Stempelwerkzeugs und der Matrize vom fertigen Auswuchtgewicht.

Dabei handelt es sich bei dem Auswuchtgewicht vorzugsweise um ein unter Kombination der Schritte des Andrückens und des Durchdrückens des Stempelwerkzeuges in einem einheitlichen Arbeitsschritt hergestelltes Gewicht.

Das Auswuchtgewicht weist vorzugsweise eine im Rahmen des Clinchens hergestellte formschlüssige und/oder kraftschlüssige und/oder stoffflüssige Verbindung zwischen dem Gewichtskörper und dem Befestigungselement auf. Die Verbindung wird vorzugsweise so hergestellt, dass zumindest ein Formschluss und ein Kraftschluss entstehen, wobei ein Formschluss beispielsweise durch ein Ausbilden eines hutförmigen oder pilzförmigen Abschnitts beim Hindurchtreten von Material des Gewichtskörpers durch eine geeignete Öffnung des Befestigungselements auf der Austrittsseite des Materials aus der Öffnung erzeugt wird.

Dementsprechend kann das Befestigungselement zur Ermöglichung der Clinchverbindung einer Öffnung, insbesondere eine Bohrung, zum Durchtritt von Material des Gewichtskörpers aufweisen. Durch diese, vorzugsweise kleinere, Öffnung bzw. ein Loch, das grundsätzlich in unterschiedlichen Formen, also rund, oval oder auch eckig, ausgebildet sein kann, wird also beim Aufdrücken des Stempels von oben auf den Gewichtskörper Material hindurchgedrückt, das auf der Unterseite die Öffnung umfließt, wodurch eine Sicherung der Verbindung entsteht.

Dementsprechend kann das Befestigungselement erfindungsgemäß mittels wenigstens eines beim Clinchen, insbesondere durch Durchtritt von Material des Gewichtskörpers durch eine Öffnung des Befestigungselements, entstehenden oder entstandenen Hinterschnitts und/oder Vorsprungs, insbesondere in Hut- und/oder Pilzform, am Gewichtskörper gehaltert sein. Es entsteht also durch das Hindurchpressen mittels des Umformwerkzeugs in Form des Stempels unterseitig der Öffnung ein Presskörper, dessen Form grundsätzlich durch die Form der Matrize auf der Unterseite vorgegeben ist. Vorzugsweise wird dabei die Matrize so gewählt, dass eine hutartige oder pilzartige Form entsteht, wobei insbesondere ein Hinterschnitt gegeben sein sollte, der die Öffnung der Feder bzw. des Halteelements übergreift, so dass dieses nicht mehr vom Gewichtskörper abfallen kann und somit ein Formschluss gegeben ist.

Der Gewichtskörper kann aus Stahl, insbesondere aus ungehärtetem Stahl, und/oder das Befestigungselement kann ebenfalls aus Stahl, insbesondere aus gehärtetem Stahl, bestehen. Dabei ist das Befestigungselement vorzugsweise eine Feder und/oder Klammer.

Insbesondere aus Gründen des Korrosionsschutzes ist es vorzuziehen, wenn der Gewichtskörper und/oder das Befestigungselement verzinkt sind. Diese Elemente sollten also, falls es sich um Stahlelemente handelt, mit einer Zinkschicht in geeigneter Dicke umgeben sein, so dass eine gegen Korrosion schützende Schicht besteht, deren Dicke sich bei Durchführung des Umformprozesses zwar stellenweise ändern kann, die aber grundsätzlich erhalten bleibt, so dass der Korrosionsschutz weiterhin gegeben ist.

Dementsprechend ist es vorzuziehen, dass der Gewichtskörper und/oder das Befestigungselement eine beim Clinchen erhaltene Zinkschicht aufweisen. Die Zinkschicht sollte also derart ausgebildet sein, dass sie insbesondere eine hinreichende Dicke aufweist, so dass sie beim Clinchen nicht beschädigt bzw. nicht zerstört wird und somit nach der Verbindung noch einen vollständigen Schutz gewährleisten kann.

Das Befestigungselement und der Gewichtskörper des Auswuchtgewichts können an der beim Einsatz des Auswuchtgewichts dem auszuwuchtenden Gegenstand zugewandten oder abgewandten Seite des Gewichtskörpers miteinander verbunden sein, wobei grundsätzlich eine Verbindung an der Sichtseite Vorteile bietet, aber auch eine Verbindung an der Rückseite möglich ist. Bei Vorliegen mehrerer Verbindungsstellen ist es natürlich prinzipiell auch denkbar, dass diese teils auf der einen, teils auf der anderen Seite vorgesehen sind.

Des Weiteren betrifft die Erfindung ein Stempelwerkzeug bzw. eine Matrize, die als Umformwerkzeuge zur Herstellung eines Auswuchtgewichts wie im vorstehenden beschrieben, insbesondere im Rahmen eines Verfahrens wie eingangs dargelegt, ausgebildet sind. Das Stempelwerkzeug weist hierzu also einen Stempelteil auf, der in der geeigneten Länge und mit einer geeigneten Fläche ein Hinausschieben von Material des Gewichtskörpers in Richtung auf ein Befestigungs- bzw. Halteelement ermöglicht. Dies erfolgt vorzugsweise im Zusammenspiel mit einer Matrize, die einen Bodenbereich bzw. einen Ausnehmungsbereich aufweist, der größenmäßig an den Stempelbereich des Stempelwerkzeugs und außerdem an eine gegebenenfalls gegebene Öffnung des Befestigungselements derart angepasst ist, dass beim Hindurchtreten von Material das Gewichtskörpers durch diese Öffnung in den Bereich der Matrize ein Pilzkopf bzw. ein Hut ausgebildet wird, der die Öffnung bzw. Bohrung des Befestigungselements zur Sicherung der Verbindung um- bzw. übergreift.

Weitere Vorteile, Merkmale und Einzelheiten der Erfindung ergeben sich anhand der folgenden Ausführungsbeispiele sowie aus den Zeichnungen. Dabei zeigen:
- Figur 1: eine Ablaufskizze zur Durchführung eines erfindungsgemäßen Verfahrens zur Herstellung eines Auswuchtgewichts,
- Figur 2: ein erfindungsgemäßes Auswuchtgewicht,
- Figur 3: die Einzelteile des Auswuchtgewichts der Figur 2 und
- Figur 4: einen Querschnitt durch das Auswuchtgewicht der Fig. 2

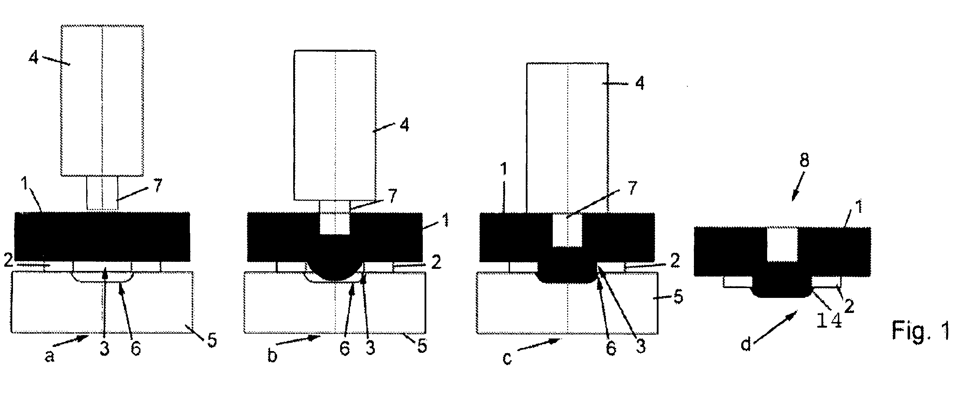

Die Figur 1 zeigt eine Ablaufskizze zur Durchführung eines erfindungsgemäßen Verfahrens zum Herstellen eines Auswuchtgewichts.

Dabei wird zunächst im Schritt a) zur Herstellung einer Verbindung zwischen einem Gewichtskörper 1 und einer das Befestigungselement darstellenden Feder 2, die eine Durchtrittsöffnung 3 aufweist, oberseitig ein Stempelwerkzeug 4 angesetzt, wozu vorher die Feder 2, auf der der Gewichtskörper 1 angeordnet ist, auf eine Matrize 5 aufgelegt wird. Die Elemente, die zu verbinden sind, bzw. die Umformwerkzeuge zur Herstellung der Verbindung werden also geeignet positioniert. Zu beachten ist darüber hinaus, dass die Matrize 5 eine Ausnehmung 6 aufweist, die es ermöglicht, dass Material, das mit Hilfe des Stempelelements 7 des Stempels 4 im Folgenden durch die Öffnung 3 der Feder 2 hindurchgedrückt werden soll, unterseitig aus der Öffnung 3 hinausfließen kann.

Der folgende Schritt b) bezeichnet den Schritt des Andrückens des Stempelwerkzeugs 4 mit dem Stempelelement 7 an den Gewichtskörper 1 derart, dass Material des Gewichtskörpers 1 durch die Öffnung 3 der Feder 2 hindurch in den Bereich der Aufnahme bzw. Ausnehmung 6 der Matrize 5 verschoben wird.

Nachfolgend erfolgt im Schritt c) das Durchdrücken, so dass das Stempelelement 7 des Stempelwerkzeugs 4 vollständig in einen hierzu geeigneten Bereich des Gewichtskörpers 1 eingedrückt wird, wodurch Material aus dem Gewichtskörper 1 durch die Öffnung 3 der Feder 2 hindurch bis zum Boden der Ausnehmung 6 der Matrize 5 gelangt, derart, dass die Ausnehmung 6 der Matrize 5 vollständig ausgefüllt wird, wobei aufgrund der Form der Ausnehmung 6 ein Hinterschnitt bezüglich der Öffnung 3 der Feder 2 gebildet wird, der bewirkt, dass die Verbindung zwischen der Feder 2 und dem Gewichtskörper 1 formschlüssig gesichert ist.

Durch ein Rückstellen des Stempels 4 sowie der Matrize 5, also durch das Entfernen der Umformwerkzeuge, wird dann im Schritt d) das fertige Auswuchtgewicht 8, bestehend aus dem Gewichtskörper 1 und der Feder 2, erhalten. Auf diese Art und Weise lässt sich also im Wesentlichen in einem einzigen Arbeitsschritt, nämlich durch das An- bzw. Durchdrücken des Stempels, eine Verbindung zwischen dem Gewichtskörper 1 und der Haltefeder 2 herstellen, wobei diese Verbindungserstellung mit wenigen und vergleichsweise einfachen Werkzeugen, nämlich lediglich mit einem Stempel 4 und einer hierzu passenden Matrize 5, erreicht werden kann und zudem der Vorteil besteht, dass unter anderem bei anderen Verbindungsarten erforderliche Nachverarbeitungsschritte zur Wiederherstellung eines Korrosionsschutzes entfallen können, da eine beim Gewichtskörper 1 bzw. der Feder 2 vorgesehene Zinkschicht beim Clinchen höchstens dünner, aber nicht beschädigt wird. Der Korrosionsschutz wird somit nicht beeinträchtigt.

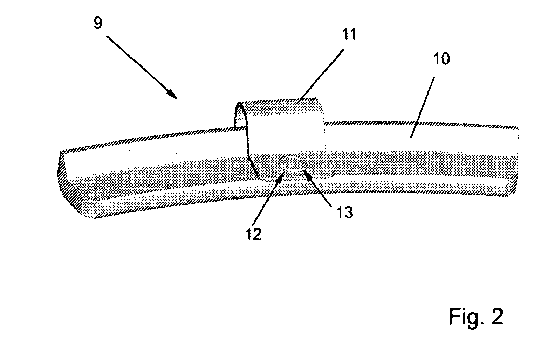

Die Figur 2 zeigt ein erfindungsgemäßes Auswuchtgewicht 9, das aus einem Gewichtskörper 10, der in Längsrichtung etwa entlang einer Mittellinie gebogen ist, sowie einer Feder 11 besteht. Dabei ist der Gewichtskörper 10 aus ungehärtetem Stahl ausgebildet, während die Feder 11 aus gehärtetem Stahl besteht.

Der Gewichtskörper 10 sowie die Feder 11 sind in einem Verbindungsbereich 12 miteinander verbunden, wobei diese Verbindung durch ein Clinchverfahren erzeugt wurde. Hierzu weist die Feder 11 eine hier nicht mehr sichtbare runde Öffnung bzw. Bohrung auf, durch die beim Verbinden mit Hilfe eines geeigneten Umformwerkzeugs Material des Gewichtskörpers 10 hindurchgedrückt wird, das die Öffnung der Feder 11 dann auf der Unterseite bzw. Austrittsseite entsprechend der Form einer Ausnehmung einer Umformmatrize mit einem Hinterschnitt, der die Verbindung sichert, umfließt. Durch das Clinchen entsteht also ein vorspringender Bereich 13 aus Material des Gewichtskörpers 10.

Dabei ist im hier gezeigten Fall die Feder 11 so mit dem Gewichtskörper 10 verbunden, dass der Verbindungsbereich 12 nach dem Anbringen des Auswuchtgewichts 9 am auszuwuchtenden Gegenstand weiterhin sichtbar ist, also beispielsweise im befestigten Zustand des Auswuchtgewichts 9 auf der dem Rad abgewandten Seite liegt, wodurch ein Kontrollieren der Verbindung leicht ermöglicht wird. Durch die spezielle Form der Feder 11 in diesem Ausführungsbeispiel wird zudem selbst bei einem Aufbrechen der Verbindung weiterhin gewährleistet, dass der Gewichtskörper 10 an den auszuwuchtenden Gegenstand geklemmt bleibt. Die erfindungsgemäße Verbindung im Bereich 12 dient also vorrangig dazu, dass das Auswuchtgewicht 9 vor der Montage in einem Teil vorliegt, also mit einem Gewichtskörper 10, der fest mit einer Feder 11 verbunden ist, zur Werkstatt bzw. an einen anderen Ort, an dem die Montage des Auswuchtgewichts 9 erfolgen soll, gebracht werden kann. Die Haltbarkeit der Clinchverbindung an sich ist dann letztlich nicht ausschlaggebend für die sichere Halterung des Auswuchtgewichts 9 am auszuwuchtenden Gegenstand. Gleichwohl lassen sich durch Clinchen sehr sichere Verbindungen realisieren, so dass ein zusätzliches Festklemmen durch ein Befestigungselement wie hier nicht zwangsläufig erforderlich ist und auch andere Ausführungsformen denkbar sind.

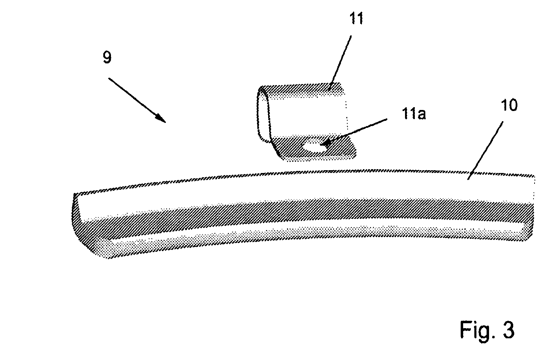

In der Figur 3 sind die Einzelteile des Auswuchtgewichts 9 der Figur 2 vor dem Verbinden gezeigt, also die Feder 11, die eine Bohrung 11a aufweist, durch die beim Clinchen Material des Gewichtskörpers 10 hindurch gedrückt wird, sowie der Gewichtskörper 10.

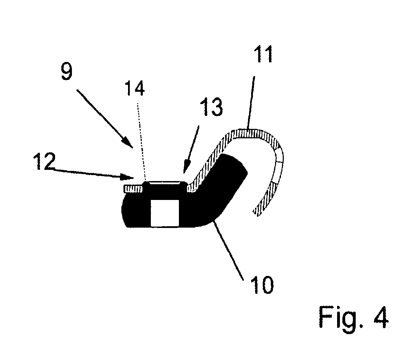

Die Figur 4 zeigt einen Querschnitt durch das Auswuchtgewicht 9 der Fig. 2 auf der Höhe des Verbindungsbereichs 12. Dabei ist zu erkennen, dass im Rahmen der Herstellung der Clinchverbindung mit Hilfe eines Stempels unter Bildung einer Ausnehmung Material des Gewichtskörpers 10 durch die in dieser Darstellung nicht zu erkennende Bohrung 11a der Feder 11 hindurch nach oben gedrückt worden ist und dort den vorspringenden Bereich 13 ausbildet, der eine Hutform aufweist. Der Hinterschnitt 14 des vorspringenden Bereichs 13 bewirkt eine formschlüssige Sicherung der Verbindung.

### Bezugszeichenliste

| | |
|---|---|
| 1 | Gewichtskörper |
| 2 | Feder |
| 3 | Durchtrittsöffnung |
| 4 | Stempel |
| 5 | Matrize |
| 6 | Ausnehmung |
| 7 | Stempelelement |
| 8 | Auswuchtgewicht |
| 9 | Auswuchtgewicht |
| 10 | Gewichtskörper |
| 11 | Feder |
| 11a | Bohrung |
| 12 | Verbindungsbereich |
| 13 | Vorspringender Bereich |
| 14 | Hinterschnitt |
| a | Schritt |
| b | Schritt |
| c | Schritt |
| d | Schritt |

## Patentansprüche

1. Verfahren zur im Rahmen der Herstellung eines Auswuchtgewichts (8, 9) vorgesehen Verbindung eines Gewichtskörpers (1, 10) und eines Befestigungselements (2,11) zum Befestigen des Gewichtskörpers (1, 10) an einem auszuwuchtenden Gegenstand, **dadurch gekennzeichnet dass** der Gewichtskörper (1, 10) und das Befestigungselement (2, 11) durch Clinchen,
Also mittels gemeinsamen Durchsetzen des Gewichtskörpers (1, 10) und des Betestigungselements (2, 11)' mit einem Stempelwerkzeug (4), miteinander verbunden werden.

2. Verfahren nach Anspruch 1, **dadurch gekennzeichnet, dass** das Clinchen unter Verwendung des Stempelwerkzeugs (4) und einer Matrize (5) durchgeführt wird.

3. Verfahren nach einem der vorangehenden Ansprüche, **dadurch gekennzeichnet, dass** zumindest die folgenden Schritte durchgeführt werden:
- Ansetzen und/oder Positionieren eines Stempelwerkzeugs (4), einer Matrize (5), des Gewichtskörpers (1, 10) und/oder des Befestigungselements (2, 11),
- Andrücken des Stempelwerkzeugs (4) an den Gewichtskörper (1, 10) derart, dass Material des Gewichtskörpers (1, 10) in Richtung und/oder in eine Ausnehmung (6) der Matrize (5) verschoben wird,
- Durchdrücken des Stempelwerkzeugs (4) derart, dass Material des Gewichtskörpers (1, 90) einen Bodenbereich der Matrize (5) und/oder der Ausnehmung (6) der Matrize (5) erreicht und
- Rückstellung des Stempelwerkzeugs (4) und der Matrize (5) vom fertigen Auswuchtgewicht (8, 9).

4. Verfahren nach Anspruch 3, **dadurch gekennzeichnet, dass** die Schritte des Andrückens und des Durchdrückens des Stempelwerkzeugs (4) in einem einheitlichen Arbeitsschritt kombiniert werden.

5. Verfahren nach einem der vorangehenden Ansprüche, **dadurch gekennzeichnet, dass** im Rahmen des Clinchens eine formschlüssige und/oder kraftschlüssige und/oder stoffschlüssige Verbindung zwischen dem Gewichtskörper (1, 10) und dem Befestigungselement (2, 11) hergestellt wird.

6. Verfahren nach einem der vorangehenden Ansprüche, **dadurch gekennzeichnet, dass** als Befestigungselement (2, 11) zur Ermöglichung einer Clinchverbindung ein Befestigungselement (2, 11) mit wenigstens einer Öffnung (3), insbesondere einer Bohrung, zum Durchtritt von Material des Gewichtskörpers (1, 10) verwendet wird.

7. Verfahren nach einem der vorangehenden Ansprüche, **dadurch gekennzeichnet, dass** das Befestigungselement (2, 11) mittels wenigstens eines beim Clinchen, insbesondere durch Durchtritt von Material des Gewichtskörpers (1, 10) durch eine Öffnung (3) des Befestigungselements (2, 11), entstehenden Hinterschnitts (14) und/oder Vorsprungs (13), insbesondere in Hut- und/oder Pilzform, am Gewichtskörper (1, 10) gehaltert wird.

8. Verfahren nach einem der vorangehenden Ansprüche, **dadurch gekennzeichnet, dass** als Gewichtskörper (1, 10) ein Gewichtskörper (1, 10) aus Stahl, insbesondere aus ungehärtetem Stahl, und/oder als Befestigungselement ein (2, 11) Befestigungselement (2, 11) aus Stahl, insbesondere aus gehärtetem Stahl, verwendet wird.

9. Verfahren nach einem der vorangehenden Ansprüche, **dadurch gekennzeichnet, dass** als Befestigungselement eine Feder (2, 11) und/oder Klammer verwendet wird.

10. Verfahren nach einem der vorangehenden Ansprüche, **dadurch gekennzeichnet, dass** ein verzinkter Gewichtskörper (1, 10) und/oder ein verzinktes Befestigungselement (2, 11) verwendet werden.

11. Verfahren nach Anspruch 10, **dadurch gekennzeichnet, dass** das Clinchen unter Erhalt der Zinkschicht des Gewichtskörpers (1, 10) und/oder des Befestigungselements (2, 11) durchgeführt wird.

12. Verfahren nach einem der vorangehenden Ansprüche, **dadurch gekennzeichnet, dass** das Befestigungselement (2, 11) und der Gewichtskörper (1, 10) an der beim Einsatz des Auswuchtgewichts (8, 9) dem auszuwuchtenden Gegenstand zugewandten oder abgewandten Seite des Gewichtskörpers (1, 10) miteinander verbunden werden.

13. Auswuchtgewicht (8, 9) mit einem Gewichtskörper (1, 10) und einem Befestigungselement (2, 11) zum Befestigen des Gewichtskörpers (1, 10) an einem auszuwuchtenden Gegenstand, **dadurch gekennzeichnet, dass** der Gewichtskörper (1, 10) und das Befestigungselement (2, 11) durch Clinchen,
Also mittels gemeinsamen Durchsetzen des Gewichtskörpers (1, 10) und des Befestigungs elements (2, 11) mit einem Stempelwerkzeug (4), miteinander verbunden sind.

14. Auswuchtgewicht (8, 9) nach Anspruch 13, **dadurch gekennzeichnet, dass** das Auswuchtgewicht (8, 9) mittels Clinchen unter Verwendung *des* Stempelwerkzeugs (4) und einer Matrize (5) hergestellt ist.

15. Auswuchtgewicht (8, 9) nach einem der Ansprüche 13 oder 14, **dadurch gekennzeichnet, dass** das Auswuchtgewicht (8, 9) unter Durchführung zumindest der folgenden Schritte hergestellt ist:
- Ansetzen und/oder Positionieren eines Stempelwerkzeugs (4), einer Matrize (5), des Gewichtskörpers (1, 10) und/oder des Befestigungselements (2, 11),
- Andrücken des Stempelwerkzeugs (4) an den Gewichtskörper (1, 10) derart, dass Material des Gewichtskörpers (1, 10) in Richtung und/oder in eine Ausnehmung (6) der Matrize (5) verschoben wird,
- Durchdrücken des Stempelwerkzeugs (4) derart, dass Material des Gewichtskörpers (1, 10) einen Bodenbereich der Matrize (5) und/oder der Ausnehmung (6) der Matrize (5) erreicht und
- Rückstellung des Stempelwerkzeugs (4) und der Matrize (5) vom fertigen Auswuchtgewicht (8, 9).

16. Auswuchtgewicht (8, 9) nach Anspruch 15, **dadurch gekennzeichnet, dass** das Auswuchtgewicht (8, 9) unter Kombination der Schritte des Andrückens und des Durchdrückens des Stempelwerkzeugs (4) in einem einheitlichen Arbeitsschritt hergestellt ist.

17. Auswuchtgewicht (8, 9) nach einem der Ansprüche 13 bis 16, **dadurch gekennzeichnet, dass** das Auswuchtgewicht (8, 9) eine im Rahmen des Clinchens hergestellte formschlüssige und/oder kraftschlüssige und/oder stoffschlüssige Verbindung zwischen dem Gewichtskörper (1, 10) und dem Befestigungselement (2, 11) aufweist.

18. Auswuchtgewicht (8, 9) nach einem der Ansprüche 13 bis 17, **dadurch gekennzeichnet, dass** das das Befestigungselement (2, 11) zur Ermöglichung einer Clinchverbindung wenigstens eine Öffnung (3), insbesondere eine Bohrung, zum Durchtritt von Material des Gewichtskörpers (1, 10) aufweist.

19. Auswuchtgewicht (8, 9) nach einem der Ansprüche 13 bis 18, **dadurch gekennzeichnet, dass** das Befestigungselement (2, 11) mittels wenigstens eines beim Clinchen, insbesondere durch Durchtritt von Material des Gewichtskörpers (1, 10) durch eine Öffnung (3) des Befestigungselements (2, 11), entstehenden oder entstandenen Hinterschnitts (14) und/oder Vorsprungs (13), insbesondere in Hut- und/oder Pilzform, am Gewichtskörper (1, 10) gehaltert ist.

20. Auswuchtgewicht (8, 9) nach einem der Ansprüche 13 bis 19, **dadurch gekennzeichnet, dass** der Gewichtskörper (1, 10) aus Stahl, insbesondere aus ungehärtetem Stahl, und/oder das Befestigungselement (2, 11) aus Stahl, insbesondere aus gehärtetem Stahl, besteht.

21. Auswuchtgewicht (8, 9) nach einem der Ansprüche 13 bis 20, **dadurch gekennzeichnet, dass** das Befestigungselement (2, 11) eine Feder (2, 11) und/oder Klammer ist.

22. Auswuchtgewicht (8, 9) nach einem der Ansprüche 13 bis 21, **dadurch gekennzeichnet, dass** der Gewichtskörper (1, 10) und/oder das Befestigungselement (2, 11) verzinkt sind.

23. Auswuchtgewicht (8, 9) nach Anspruch 22, **dadurch gekennzeichnet, dass** der Gewichtskörper (1, 10) und/oder das Befestigungselement (2, 11) eine beim Clinchen erhaltene Zinkschicht aufweisen.

24. Auswuchtgewicht (8, 9) nach einem der Ansprüche 13 bis 23, **dadurch gekennzeichnet, dass** das Befestigungselement (2, 11) und der Gewichtskörper (1, 10) an der beim Einsatz des Auswuchtgewichts (8, 9) dem auszuwuchtenden Gegenstand zugewandten oder abgewandten Seite des Gewichtskörpers miteinander verbunden sind.

## Claims

1. A method provided within the framework of the production of a balancing weight (8, 9) for connecting a weight body (1, 10) and a fastening element (2, 11) for fastening the weight body (1, 10) to an object to be balanced, **characterised in that** the weight body (1, 10) and the fastening element (2, 11) are connected to one another by clinching, i.e. by passing a punching tool (4) through both the weight body (1, 10) and the fastening element (2, 11).

2. The method according to Claim 1, **characterised in that** the clinching is implemented using the punching tool (4) and a die (5).

3. The method according to any of the preceding claims, **characterised in that** at least the following steps are carried out:
- applying and/or positioning a punching tool (4), a die (5), the weight body (1, 10) and/or the fastening element (2, 11),
- pushing the punching tool (4) against the weight body (1, 10) such that material of the weight body (1, 10) is shifted in the direction of and/or into a recess (6) of the die (5),
- pushing through the punching tool (4) such that material of the weight body (1, 10) reaches a base region of the die (5) and/or of the recess (6) of the die (5), and
- re-setting the punching tool (4) and the die (5) of the finished balancing weight (8, 9).

4. The method according to Claim 3, **characterised in that** the steps of pressing on and pressing through the punching tool (4) are combined in an integrated procedural step.

5. The method according to any of the preceding claims, **characterised in that** within the framework of the clinching, a form-fit and/or force-fit and/or material-fit connection between the weight body (1, 10) and the fastening element (2, 11) is produced.

6. The method according to any of the preceding claims, **characterised in that** a fastening element (2, 11) with at least one opening (3), in particular a borehole, through which material of the weight body (1, 10) passes, is used as a fastening element (2, 11) enabling a clinch connection.

7. The method according to any of the preceding claims, **characterised in that** the fastening element (2, 11) is held on the weight body (1, 10) by at least one undercut (14) produced by clinching, in particular by material of the weight body (1, 10) passing through an opening (3) of the fastening element (2, 11) and/or a projection (13), in particular in the form of a hat and/or mushroom.

8. The method according to any of the preceding claims, **characterised in that** a weight body (1, 10) made of steel, in particular of unhardened steel, is used as a weight body (1, 10), and/or a fastening element (2, 11) made of steel, in particular of hardened steel, is used as a fastening element (2, 11).

9. The method according to any of the preceding claims, **characterised in that** a spring (2, 11) and/or a clamp is used as a fastening element (2, 11).

10. The method according to any of the preceding claims, **characterised in that** a galvanized weight body (1, 10) and/or a galvanized fastening element (2, 11) is used.

11. The method according to Claim 10, **characterised in that** the clinching is implemented such as to preserve the zinc layer of the weight body (1, 10) and/or of the fastening element (2, 11).

12. The method according to any of the preceding claims, **characterised in that** the fastening element (2, 11) and the weight body (1, 10) are connected to one another on the side of the weight body (1, 10) facing towards or away from the object to be balanced when using the balancing weight (8, 9).

13. A balancing weight (8, 9) having a weight body (1, 10) and a fastening element (2, 11) for fastening the weight body (1, 10) to an object to be balanced, **characterised in that** the weight body (1, 10) and the fastening element (2, 11) are connected to one another by clinching, i.e. by passing a punching tool (4) through both the weight body (1, 10) and the fastening element (2, 11).

14. The balancing weight (8, 9) according to Claim 13, **characterised in that** the balancing weight (8, 9) is produced by clinching using the punching tool (4) and a die (5).

15. The balancing weight (8, 9) according to either of Claims 13 or 14, **characterised in that** the balancing weight (8, 9) is produced by carrying out at least the following steps:
- applying and/or positioning a punching tool (4), a die (5), the weight body (1, 10) and/or the fastening element (2, 11),
- pushing the punching tool (4) against the weight body (1, 10) such that material of the weight body (1, 10) is shifted in the direction of and/or into a recess (6) of the die (5),
- pushing through the punching tool (4) such that material of the weight body (1, 10) reaches a base region of the die (5) and/or of the recess (6) of the die (5), and
- re-setting the punching tool (4) and the die (5) of the finished balancing weight (8, 9).

16. The balancing weight (8, 9) according to Claim 15, **characterised in that** the balancing weight (8, 9) is produced by combining the steps of pushing on and pushing through the punching tool (4) in an integrated procedural step.

17. The balancing weight (8, 9) according to any of Claims 13 to 16, **characterised in that** the balancing weight (8, 9) has a form-fit and/or force-fit and/or material-fit connection between the weight body (1, 10) and the fastening element (2, 11) produced within the framework of clinching.

18. The balancing weight (8, 9) according to any of Claims 13 to 17, **characterised in that** the fastening element (2, 11) has at least one opening (3), in particular a borehole, through which material of the weight body (1, 10) passes in order to enable a clinch connection.

19. The balancing weight (8, 9) according to any of Claims 13 to 18, **characterised in that** the fastening element (2, 11) is held on the weight body (1, 10) by at least one undercut (14) produced by clinching, in particular by material of the weight body (1, 10) passing through an opening (3) of the fastening element (2, 11) and/or a projection (13), in particular in the form of a hat and/or mushroom.

20. The balancing weight (8, 9) according to any of Claims 13 to 19, **characterised in that** the weight body (1, 10) is made of steel, in particular of unhardened steel, and/or the fastening element (2, 11) is made of steel, in particular of hardened steel.

21. The balancing weight (8, 9) according to any of Claims 13 to 20, **characterised in that** the fastening element (2, 11) is a spring (2, 11) and/or a clamp.

22. The balancing weight (8, 9) according to any of Claims 13 to 21, **characterised in that** the weight body (1, 10) and/or the fastening element (2, 11) are galvanized.

23. The balancing weight (8, 9) according to Claim 22, **characterised in that** the weight body (1, 10) and/or the fastening element (2, 11) have a zinc layer preserved during clinching.

24. The balancing weight (8, 9) according to any of Claims 13 to 23, **characterised in that** the fastening element (2, 11) and the weight body (1, 10) are connected to one another on the side of the weight body facing towards or away from the object to be balanced when using the balancing weight (8, 9).

## Revendications

1. Procédé de liaison, prévue dans le cadre de la fabrication d'une masselotte d'équilibrage (8, 9), d'un corps d'équilibrage (1, 10) et d'un élément de fixation (2, 11) pour fixer le corps d'équilibrage (1, 10) sur un objet à équilibrer, **caractérisé en ce que** le corps d'équilibrage (1, 10) et l'élément de fixation (2, 11) sont reliés entre eux par clinchage, c.-à-d. par interpénétration du corps d'équilibrage (1, 10) et de l'élément de fixation (2, 11) au moyen d'un outil de poinçonnage (4).

2. Procédé selon la revendication 1, **caractérisé en ce que** le clinchage est exécuté en utilisant l'outil de poinçonnage (4) et une matrice (5).

3. Procédé selon l'une des revendications précédentes, **caractérisé en ce qu'**au moins les étapes suivantes sont exécutées :
- accostage et/ou positionnement d'un outil de poinçonnage (4), d'une filière (5), du corps d'équilibrage (1, 10) et/ou de l'élément de fixation (2, 11),
- pressage de l'outil de poinçonnage (4) sur le corps d'équilibrage (1, 10) de façon à déplacer la matière du corps d'équilibrage (1, 10) en direction de et/ou dans un évidement (6) de la matrice (5),
- enfoncement de l'outil de poinçonnage (4) de façon que la matière du corps d'équilibrage (1, 10) atteigne une région de fond de la matrice (5) et/ou de l'évidement (6) de la matrice (5), et
- retrait de l'outil de poinçonnage (4) et de la matrice (5) de la masselotte d'équilibrage (8, 9) finie.

4. Procédé selon la revendication 3, **caractérisé en ce que** les étapes de pressage et d'enfoncement de l'outil de poinçonnage (4) sont combinées en une étape de travail unique et homogène.

5. Procédé selon l'une des revendications précédentes, **caractérisé en ce que**, dans le cadre du clinchage, est établie une liaison par complémentarité de forme et/ou de force et/ou de matière entre le corps d'équilibrage (1, 10) et l'élément de fixation (2, 11).

6. Procédé selon l'une des revendications précédentes, **caractérisé en ce que** l'on utilise comme élément de fixation (2, 11) pour permettre une liaison par clinchage un élément de fixation (2, 11) comportant au moins une ouverture (3), en particulier un alésage, pour le passage de la matière du corps d'équilibrage (1, 10).

7. Procédé selon l'une des revendications précédentes, **caractérisé en ce que** l'élément de fixation (2, 11) est fixé sur le corps d'équilibrage (1, 10) au moyen d'au moins une contre-dépouille (14) et/ou partie en saillie (13), en particulier en forme de chapeau et/ou de champignon, formée lors du clinchage, en particulier par le passage de la matière du corps d'équilibrage (1, 10) à travers une ouverture (3) de l'élément de fixation (2, 11).

8. Procédé selon l'une des revendications précédentes, **caractérisé en ce que** l'on utilise comme corps d'équilibrage (1, 10) un corps d'équilibrage (1, 10) en acier, en particulier en acier non trempé, et/ou en ce que l'on utilise comme élément de fixation (2, 11) un élément de fixation (2, 11) en acier, en particulier en acier trempé.

9. Procédé selon l'une des revendications précédentes, **caractérisé en ce que** l'on utilise comme élément de fixation (2, 11) un ressort (2, 11) et/ou une agrafe.

10. Procédé selon l'une des revendications précédentes, **caractérisé en ce que** l'on utilise un corps d'équilibrage (1, 10) galvanisé et/ou un élément de fixation (2, 11) galvanisé.

11. Procédé selon la revendication 10, **caractérisé en ce que** le clinchage est réalisé en préservant la couche de zinc du corps d'équilibrage (1, 10) et/ou de l'élément de fixation (2, 11).

12. Procédé selon l'une des revendications précédentes, **caractérisé en ce que** l'élément de fixation (2, 11) et le corps d'équilibrage (1, 10) sont reliés entre eux sur le côté du corps d'équilibrage (1, 10) qui, lors de la mise en oeuvre de la masselotte d'équilibrage (8, 9), est orienté vers ou à l'opposé de l'objet à équilibrer.

13. Masselotte d'équilibrage (8, 9) comprenant un corps d'équilibrage (1, 10) et un élément de fixation (2, 11) destiné à fixer le corps d'équilibrage (1, 10) sur un objet à équilibrer, **caractérisée en ce que** le corps d'équilibrage (1, 10) et l'élément de fixation (2, 11) sont reliés entre eux par clinchage, c.-à-d. par interpénétration du corps d'équilibrage (1, 10) et de l'élément de fixation (2, 11) au moyen d'un outil de poinçonnage (4).

14. Masselotte d'équilibrage (8, 9) selon la revendication 13, **caractérisée en ce que** la masselotte d'équilibrage (8, 9) est fabriquée par clinchage en utilisant l'outil de poinçonnage (4) et une matrice (5).

15. Masselotte d'équilibrage (8, 9) selon l'une des revendications 13 ou 14, **caractérisée en ce que** la masselotte d'équilibrage (8, 9) est fabriquée en exécutant au moins les étapes suivantes :
- accostage et/ou positionnement d'un outil de poinçonnage (4), d'une filière (5), du corps d'équilibrage (1, 10) et/ou de l'élément de fixation (2, 11),
- pressage de l'outil de poinçonnage (4) sur le corps d'équilibrage (1, 10) de façon à déplacer la matière du corps d'équilibrage (1, 10) en direction de et/ou dans un évidement (6) de la matrice (5),
- enfoncement de l'outil de poinçonnage (4) de façon que la matière du corps d'équilibrage (1, 10) atteigne une région de fond de la matrice (5) et/ou de l'évidement (6) de la matrice (5), et
- retrait de l'outil de poinçonnage (4) et de la matrice (5) de la masselotte d'équilibrage (8, 9) finie.

16. Masselotte d'équilibrage (8, 9) selon la revendication 15, **caractérisée en ce que** la masselotte d'équilibrage (8, 9) est fabriquée en combinant les étapes de pressage et d'enfoncement de l'outil de poinçonnage (4) en une étape de travail unique et homogène.

17. Masselotte d'équilibrage (8, 9) selon l'une des revendications 13 à 16, **caractérisée en ce que** la masselotte d'équilibrage (8, 9) présente une liaison par complémentarité de forme et/ou de force et/ou de matière établie dans le cadre du clinchage entre le corps d'équilibrage (1, 10) et l'élément de fixation (2, 11).

18. Masselotte d'équilibrage (8, 9) selon l'une des revendications 13 à 17, **caractérisée en ce que**, pour permettre une liaison par clinchage, l'élément de fixation (2, 11) présente au moins une ouverture (3), en particulier un alésage, pour le passage de la matière du corps d'équilibrage (1, 10).

19. Masselotte d'équilibrage (8, 9) selon l'une des revendications 13 à 18, **caractérisée en ce que** l'élément de fixation (2, 11) est fixé sur le corps d'équilibrage (1, 10) au moyen d'au moins une contre-dépouille (14) et/ou partie en saillie (13), en particulier en forme de chapeau et/ou de champignon, se formant ou formée lors du clinchage, en particulier par le passage de la matière du corps d'équilibrage (1, 10) à travers une ouverture (3) de l'élément de fixation (2, 11).

20. Masselotte d'équilibrage (8, 9) selon l'une des revendications 13 à 19, **caractérisée en ce que** le corps d'équilibrage (1, 10) est en acier, en particulier en acier non trempé, et/ou l'élément de fixation (2, 11) est en acier, en particulier en acier trempé.

21. Masselotte d'équilibrage (8, 9) selon l'une des revendications 13 à 20, **caractérisée en ce que** l'élément de fixation (2, 11) est un ressort (2, 11) et/ou une agrafe.

22. Masselotte d'équilibrage (8, 9) selon l'une des revendications 13 à 21, **caractérisée en ce que** le corps d'équilibrage (1, 10) et/ou l'élément de fixation (2, 11) sont galvanisés.

23. Masselotte d'équilibrage (8, 9) selon la revendication 22, **caractérisée en ce que** le corps d'équilibrage (1, 10) et/ou l'élément de fixation (2, 11) présentent une couche de zinc préservée lors du clinchage.

24. Masselotte d'équilibrage (8, 9) selon l'une des revendications 13 à 23, **caractérisée en ce que** l'élément de fixation (2, 11) et le corps d'équilibrage (1, 10) sont reliés entre eux sur le côté du corps d'équilibrage qui, lors de la mise en oeuvre de la masselotte d'équilibrage (8, 9), est orienté vers ou à l'opposé de l'objet à équilibrer.
